# EUROPÄISCHE PATENTSCHRIFT

(11) **EP 4 224 042 B1**
(45) Veröffentlichungstag und Bekanntmachung des Hinweises auf die Patenterteilung: **13.03.2024**
(21) Anmeldenummer: 22155598.0
(22) Anmeldetag: 08.02.2022
(51) Int. Cl.: F16K 1/02, F16K 1/32, F16K 39/02

(54) **RÜCKFLUSSVERHINDERERVENTIL**
BACKFLOW PREVENTER VALVE
CLAPET ANTI-RETOUR

(43) Veröffentlichungstag der Anmeldung: 09.08.2023
(73) Patentinhaber: Flühs Drehtechnik GmbH, 58515 Lüdenscheid (DE)
(72) Erfinder: Roicke, Stefan, 58849 Herscheid (DE); Klawin, Tim-Florian, 58553 Halver (DE); Thurau, Friedrich, 58849 Herscheid (DE)
(74) Vertreter: Patentanwälte Dörner & Kötter PartG mbB

(56) Entgegenhaltungen:
- EP-B1- 2 325 533
- DE-U1-202021 101 378
- JP-A- S5 448 330

## Beschreibung

Die Erfindung betrifft ein Rückflussverhindererventil, mit einem Kopfstück, in dem ein Druckzylinder angeordnet ist, der mit einer Spindel verbunden ist, über deren Drehung der Druckzylinder in dem Kopfstück verschiebbar ist und der einen Rückschlagkolben aufnimmt, der in einem ersten Kolbenraum des Druckzylinders verschiebbar angeordnet ist und der endseitig mit einer Dichtanordnung versehen ist.

Derartige Rückflussverhindererventile, wie sie beispielsweise in der EP 2 325 533 B1 beschrieben sind, werden in Absperrarmaturen eingesetzt. Dabei ist an einem Kolben ein Dichtungselement angeordnet, welches innerhalb der Armatur in den Leitungsweg einbringbar ist, wodurch der Durchfluss gesperrt ist. Hierbei ist der Kolben schräg zur Leitung angeordnet und mit einem Handrad verbunden, über das der Kolben bewegbar ist. Zur Rückflussverhinderung ist der Kolben regelmäßig über eine Druckfeder in Richtung der Dichtfläche vorgespannt. Zum absperren des Rückflussverhindererventils ist ein Druckstück angeordnet, das den Kolben umfassend auf das Dichtelement des Kolbens aufgefahren werden kann.

Ventiloberteile der vorgenannten Art haben sich in der Praxis bewährt. In bestimmten Situationen, beispielsweise beim Wechsel einer in einer Leitung angeordneten Wasseruhr, zu deren Entfernen der Wasserzulauf bereits über ein Absperrventil versperrt ist, besteht beim Absperren des vorstehenden Ventils das Problem, dass das von dem Druckstück beim Verfahren verdrängte Wasser nicht entweichen kann, wodurch der Druck in dem Leitungsstück erheblich ansteigt, bis eine Bewegung des Druckstücks von Hand nicht mehr möglich ist. Der erheblich ansteigende Druck kann zudem auch zur Beschädigung des Dichtungselements oder sogar der Wasseruhr führen.

Zur Lösung dieser Problemstellung ist in der DE 20 2021 101 378 U1 ein Rückflussverhindererventil beschrieben, bei dem in der Dichtanordnung ein Druckausgleichskanal geführt ist, in dem eine Überdruckventilbaugruppe angeordnet ist. Hierdurch ist bei Übersteigung eines Grenzdrucks in der Leitung ein Entweichen von verdrängtem Wasser durch den Druckausgleichskanal ermöglichst. Bei diesem Rückflussverhindererventil ist bereits ein übermäßiger Druckanstieg in der Leitung beim Verfahren des Druckstücks zum Absperren der Leitung wirksam verhindert. Die Realisierung der Überdruckventilbaugruppe erweist sich jedoch als aufwändig. Insbesondere ist nur ein geringer Einbauraum für die erforderliche Druckbegrenzungsfeder dieser Dichtanordnung vorhanden, wodurch hohe Anforderungen an die einzusetzende Feder bestehen, da die Überdruckventilgruppe einen Öffnungsdruck von bis zu 16 bar standhalten muss.

Hier setzt die vorliegende Erfindung an. Der Erfindung liegt die Aufgabe zugrunde, ein Rückflussverhindererventil der vorstehenden Art zu schaffen, bei dem ein übermäßiger Druckanstieg in der Leitung beim Verfahren des Druckstücks zum Absperren der Leitung verhindert ist und das keine Überdruckventilbaugruppe in der Dichtanordnung erfordert. Gemäß der Erfindung wird diese Aufgabe durch ein Rückflussverhindererventil mit den Merkmalen des kennzeichnenden Teils des Patentanspruchs 1 gelöst.

Mit der Erfindung ist ein Rückflussverhindererventil geschaffen, bei dem ein übermäßiger Druckanstieg in der Leitung beim Verfahren des Druckstücks zum Absperren der Leitung verhindert ist und dessen Dichtanordnung keiner Überdruckventilbaugruppe bedarf. Dadurch, dass der Druckzylinder eine Druckausgleichspumpe umfasst, die über die Spindel betrieben ist, ist durch eine Drehung der Spindel zur Bewegung des Druckzylinders zugleich ein Antrieb der Druckausgleichspumpe bewirkt, wodurch das von dem Druckzylinder beim Verfahren verdrängte Wasser abgesaugt wird. Der Druck in dem Leitungsstück steigt folglich hierdurch nicht mehr an, eine Bewegung des Druckstücks von Hand bleibt uneingeschränkt möglich.

In Weiterbildung der Erfindung ist die Druckausgleichspumpe durch einen zweiten Kolbenraum des Druckzylinders gebildet, der über einen Durchgangskanal mit dem ersten Kolbenraum verbunden ist und in dem ein Pumpkolben verschiebbar angeordnet ist, der über einen Gewindeeingriff mit der Spindel verbunden ist, über deren Drehung er verschiebbar ist. Hierdurch ist bei Drehung der Spindel eine Verschiebung des Pumpkolbens in dem zweiten Kolbenraum bewirkt, wodurch ein Unterdruck erzielt ist, durch den wiederum über den Durchgangskanal durch den ersten Kolbenraum Wasser aus dem Leitungsstück angesogen wird.

In Ausgestaltung der Erfindung ist der Rückschlagkolben in dem ersten Kolbenraum über einen Gleitring geführt, der mit einem Druckausgleichsspalt versehen ist. Hierdurch ist eine Führung des Rückschlagkolbens ohne Beeinträchtigung der Verbindung zwischen zweitem Kolbenraum und dem Leitungsstück, in den das Rückflussverhindererventil eingesetzt ist, erzielt.

In weiterer Ausgestaltung der Erfindung weist der Pumpkolben eine Führungsstange auf, die durch den Durchgangskanal hindurchragt. Hierdurch ist eine zuverlässige Führung des Pumpkolbens erzielt, wodurch einem ungewollten Verkanten entgegengewirkt ist.

In Weiterbildung der Erfindung weist der Rückschlagkolben eine axiale Sackbohrung auf, in welche die Führungsstange in einer in den ersten Kolbenraum eingefahrenen Position des Rückschlagkolbens eingreift, wobei in den Rückschlagkolben eine radiale Druckausgleichsbohrung eingebracht ist, die in der axialen Sackbohrung mündet. Hierdurch ist eine kompakte Bauweise erzielt. Beim Einfahren des Rückschlagkolbens umfasst dieser die Führungsstange. Das durch die Führungsstange in der Sackbohrung des Rückschlagkolbens verdrängte Wasser kann durch die radiale Druckausgleichsbohrung entweichen.

In Ausgestaltung der Erfindung ist in der axialen Sackbohrung des Rückschlagkolbens eine Feder angeordnet, die gegen den Druckzylinder vorgespannt ist. Hierdurch ist ein Rückfluss von Wasser in der Leitung, in die das Rückflussverhindererventil eingesetzt ist, bei abnehmendem Leitungsdruck verhindert. Die vorzugsweise als Druckspiralfeder ausgebildete Feder findet ausreichend Bauraum zwischen der Innenwandung der Sackbohrung des Rückschlagkolbens und der Führungsstange.

In weiterer Ausgestaltung der Erfindung weist der Pumpkolben eine Antriebsstange auf, die mit der Spindel im Gewindeeingriff ist. Dabei weist die Antriebsstange vorzugsweise ein Außengewinde auf, das in eine in der Spindel eingebrachte Gewindebohrung eingreift. Hierdurch ist eine axiale Bewegung der Antriebsstange und damit des Pumpkolbens bei Drehung der Spindel bewirkt.

In Weiterbildung der Erfindung ist die Spindel drehfest mit einer Gewindeglocke verbunden, die ein erstes Innengewinde aufweist, das mit einem außen an dem Kopfstück angeordneten Außengewinde im Eingriff ist. Hierdurch ist eine Verschiebung des den Rückschlagkolben aufnehmenden Druckzylinders durch Drehung der Spindel bewirkt.

In Ausgestaltung der Erfindung ist in der Gewindeglocke axial vor dem ersten Innengewinde ein innendurchmesserreduzierter Abschnitt angeordnet, der ein zweites Innengewinde aufweist, das mit einem außen an dem Druckzylinder angeordneten Außengewinde im Eingriff ist. Dabei ist das erste Innengewinde vorteilhaft entgegengerichtet zu dem in das Aussengewinde des Druckzylinders eingreifende Innengewinde. Vorzugsweise ist das erste Innengewinde ein Rechtsgewinde und das zweite Innengewinde ist ein Linksgewinde. Hierdurch ist durch Drehung der Spindel eine Verschiebung des von dem Druckzylinder aufgenommenen Rückschlagkolbens additiv zur gleichgerichteten Verschiebung des Druckzylinders in dem Kopfstück bewirkt.

In weiterer Ausgestaltung der Erfindung ist die Gewindeglocke aus einem topfförmigen Trägerstück gebildet, das einen hohlzylindrische Ansatz aufweist, der das zweite Innengewinde aufweist und der mit einem Außengewinde versehen ist, auf das ein dieses in der Länge überragende Gewindehülse aufgeschraubt und nicht lösbar fixiert, insbesondere verklebt ist, die das erste Innengewinde aufweist. Hierdurch ist die Herstellung der Gewindeglocke sowie die Montage des Rückflussverhindererventils vereinfacht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Rückflussverhindererventils im Längsschnitt mit angedeuteter Armatur in geöffneter Position (Rückschlagkolben eingefahren);
- Figur 2: die Darstellung des Rückflussverhindererventils aus Figur 1 in geschlossener Position (Rückschlagkolben ausgefahren)

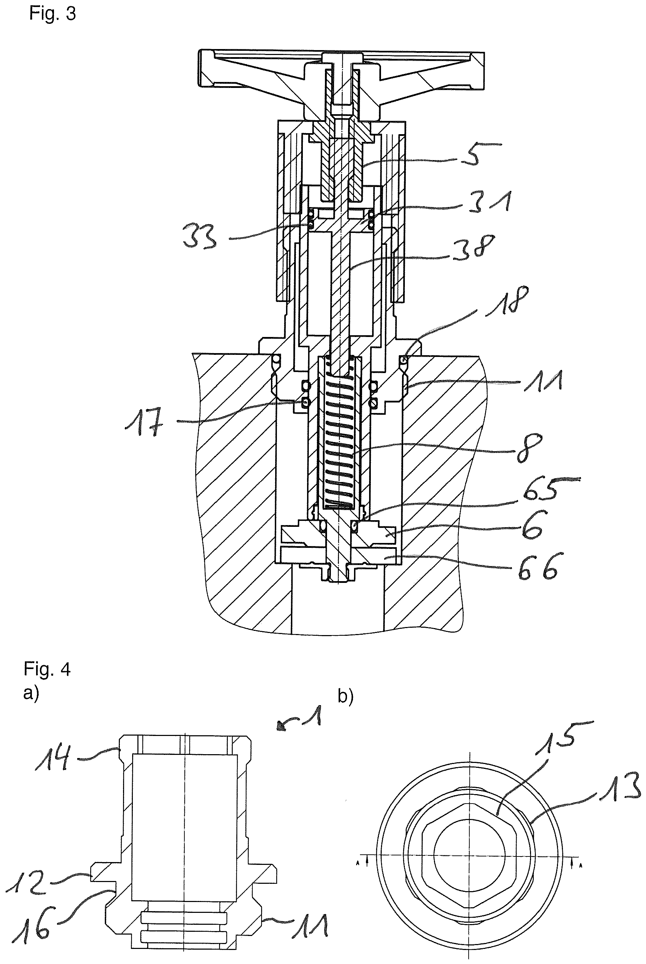

- Figur 3: die Darstellung des Rückflussverhindererventils aus Figur 2 in verschlossener Position (Druckzylinder ausgefahren);
- Figur 4: die Darstellung des Kopfstückes des Rückflussverhindererventils Ventils aus Figur 1
a) im Längsschnitt;
b) in der Draufsicht;

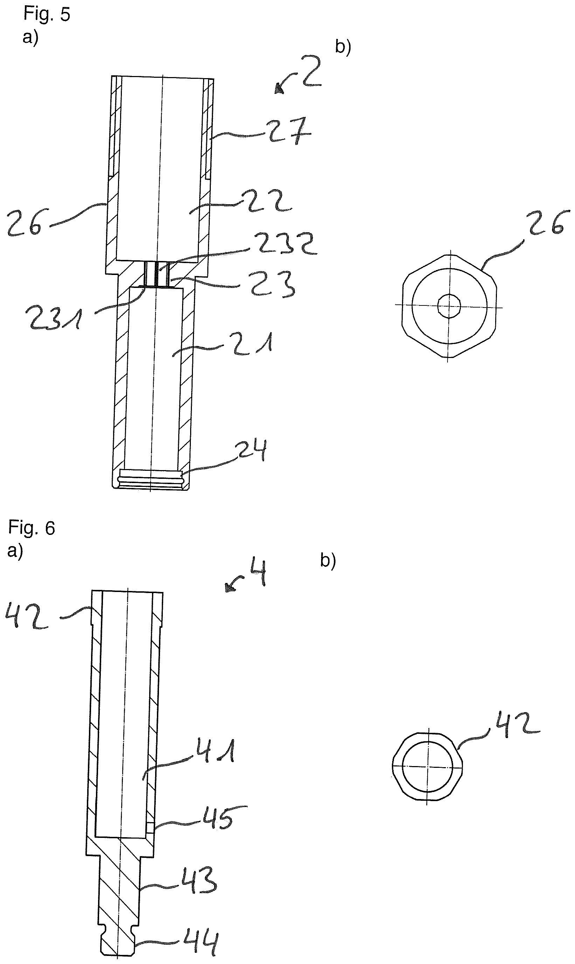

- Figur 5: die Darstellung des Druckzylinders des Rückflussverhindererventils aus Figur 1;
a) im Längsschnitt;
b) in der Draufsicht;
- Figur 6: die Darstellung des Rückschlagkolbens des Rückflussverhindererventils aus Figur 1
a) im Längsschnitt;
b) in der Draufsicht;

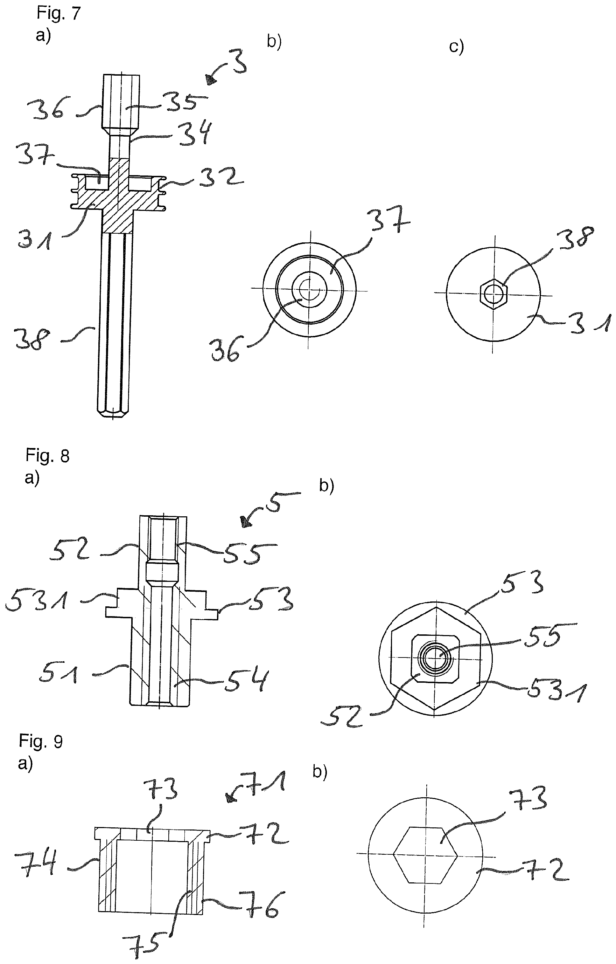

- Figur 7: die Darstellung des Pumpkolbens des Rückflussverhindererventils aus Figur 1
a) im Teilschnitt;
b) in der Draufsicht;
c) in der Ansicht von unten;
- Figur 8: die schematische Darstellung der Spindel des Rückflussverhindererventils aus Figur 1
a) im Längsschnitt;
b) in der Draufsicht;

- Figur 9: die schematische Darstellung des Trägerstücks der Gewindeglocke des Rückflussverhindererventils aus Figur 1
a) im Längsschnitt;
b) in der Draufsicht;

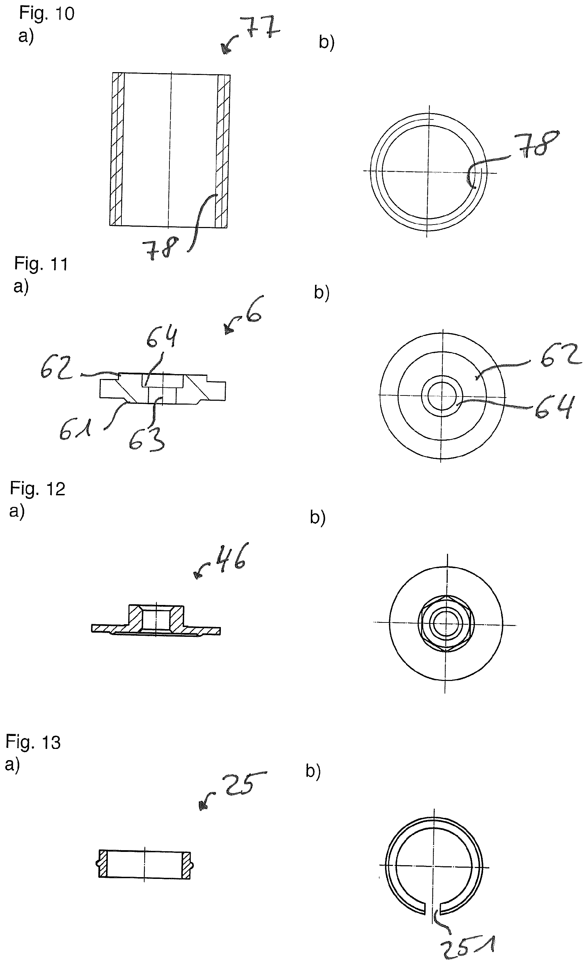

- Figur 10: die schematische Darstellung der Gewindehülse der Gewindeglocke des Rückflussverhindererventils aus Figur 1
a) im Längsschnitt;
b) in der Draufsicht;
- Figur 11: die Darstellung der Kegelscheibe des Rückflussverhindererventils aus Figur 1
a) im Längsschnitt;
b) in der Draufsicht;
- Figur 12: die Darstellung der Kragenmutter des Rückflussverhindererventils aus Figur 1
a) im Längsschnitt;
b) in der Draufsicht;
- Figur 13: die Darstellung des Gleitrings des Rückflussverhindererventils aus Figur 1
a) im Längsschnitt;
b) in der Draufsicht;

Das als Ausführungsbeispiel gewählte Rückflussverhindererventil besteht im Wesentlichen aus einem Kopfstück 1, das von einem Druckzylinder 2 durchdrungen ist, das einen Pumpkolben 3 aufnimmt und in dem ein Rückschlagkolben 4 angeordnet ist, an dem eine Kegelscheibe 6 befestigt ist, wobei der Druckzylinder 2 und der Pumpkolben 3 über eine Spindel 5 mit einem Handrad 57 verbunden sind, über die sie axial in dem Kopfstück 1 in zueinander entgegengesetzte Richtungen verschiebbar sind.

Das Kopfstück 1 ist ein weitgehend hohlzylindrisch ausgeführtes Messingdrehteil. An seinem unteren, armaturseitigen Ende ist an dem Kopfstück 1 ein erstes Außengewinde 11 angebracht, welches von einem umlaufenden Kragen 12 begrenzt ist. An den Kragen 12 schließt sich ein Außensechskant 13 an, der in einen außendurchmesserverjüngten Abschnitt übergeht, an dessen Ende ein zweites Außengewinde 14 zur Aufnahme der Gewindehülse 77 der Gewindeglocke 7 eingebracht ist. Im Ausführungsbeispiel ist das Außengewinde 14 als Trapezrechtsgewinde ausgeführt. Innen ist in das Kopfstück 1 in Höhe des zweiten Außengewindes 14 ein Innensechskantkragen 15 zur Führung und Verdrehsicherung des Druckzylinders 2 eingebracht. An seiner dem ersten Außengewinde 11 entgegengesetzten Innenseite sind in das Kopfstück 1 parallel zueinander zwei Nuten 16 zur Aufnahme von O-Ringen 17 eingebracht. Außen ist an dem Kopfstück 1 unterhalb des Kragens 12 ein O-Ring 18 zur Abdichtung gegenüber einer Armatur 9 angeordnet.

Der Druckzylinder 2 ist als im Wesentlichen hohlzylinderförmig ausgebildetes Messingdrehteil ausgeführt und weist einen zylindrischen ersten Kolbenraum 21 und einen diesem gegenüber durchmessererweiterten zylindrischen zweiten Kolbenraum 22 auf, die über einen Durchgangskanal 23 miteinander verbunden sind. Der Durchgangskanal 23 ist an seinem dem ersten Kolbenraum 21 zugewandten Ende mit einer Durchmessererweiterung 231 versehen, in die umlaufend über dessen Innenmantelfläche eingebrachte, axiale über die gesamte Länge verlaufende Kerben 232 münden, wodurch eine verdrehsichernde Führung in Art eines Innensechskants erzielt ist.

Der erste Kolbenraum 21 des Druckzylinders 2 weist an seinem dem Durchgangskanal 23 gegenüberliegenden Ende einen durchmessererweiterten Absatz 24 zur Aufnahme eines Gleitrings 25 auf, über den der Rückschlagkolben 4 in dem ersten Kolbenraum 21 verschiebbar geführt ist. Außen ist an dem Druckzylinder 2 im Bereich des zweiten Kolbenraums 21 ein sechskantförmiger Abschnitt 26 vorhanden, an den sich ein Außengewinde 27 anschließt, das im Ausführungsbeispiel als Trapezlinksgewinde ausgeführt ist. Die Außenkontur des sechskantförmigen Abschnitts 26 entspricht im Wesentlichen der Innenkontur des Innensechskantkragens 15 des Kopfstücks 1, durch den er geführt ist.

Der Pumpkolben 3 weist einen zylindrischen Kolbenabschnitt 31 auf, der außen umlaufend mit zwei beabstandet zueinander angeordneten Nuten 32 versehen ist, in die jeweils ein O-Ring 33 zur Abdichtung gegenüber dem zweiten Kolbenraum 22 des Druckzylinders 2 eingebracht ist. Auf seiner der Spindel 5 zugewandten Seite geht der Kolbenabschnitt 31 zentrisch in eine Antriebsstange 34 über, die endseitig einen durchmessererweiterten Abschnitt 35 aufweist, der mit einem Außengewinde 36 versehen ist, das als Trapezrechtsgewinde ausgebildet ist und über das die Antriebsstange 34 mit der Spindel 5 verbunden ist. Die Antriebsstange 34 umgebend ist in den Kolbenabschnitt 31 eine Ringnut 37 eingebracht. An seiner der Antriebsstange 34 gegenüberliegenden Unterseite geht der Kolbenabschnitt 31 in eine zentrische Führungsstange 38 mit sechseckigem Querschnitt über, mit dem sie in dem Durchgangskanal 23 des Druckzylinders 2 verdrehsicher geführt ist, den sie durchdringt.

Die Spindel 5 ist als im Wesentlichen zylinderförmig ausgebildetes Messingdrehteil ausgeführt. Die Spindel 5 ist unterteilt in einen zylindrischen Abschnitt 51 und einen vierkantförmig ausgebildeten Abschnitt 52, zwischen denen ein umlaufender Kragen 53 angeordnet ist, auf dem ein Sechskantabsatz 531 angeordnet ist. In den zylindrischen Abschnitt 51 ist in die Spindel 5 zentrisch eine erste axiale Gewindebohrung 54 eingebracht, die im Ausführungsbeispiel ein Trapezrechtsgewinde aufweist, in das die Antriebsstange 34 des Pumpkolbens 3 mit ihrem Außengewinde 36 eingreift. In den vierkantförmigen Abschnitt 52 ist zentrisch eine zweite axiale Gewindebohrung 55 eingebracht, das ein metrisches Innengewinde aufweist. Die Gewindebohrung 55 dient der Aufnahme einer Schraube 56 zur Befestigung des auf den Vierkantabschnitt 52 aufgesteckten Handrades 57.

Zwischen Druckzylinder 2 und Handrad 57 ist auf die Spindel 5 eine Gewindeglocke 7 aufgebracht. Die Gewindeglocke 7 ist im Ausführungsbeispiel gebildet aus einem Trägerstück 71 und einer Gewindehülse 77. Das Trägerstück 71 ist als im Wesentlichen topfförmiges Messingdrehteil ausgebildet und weist eine kreisrunde Scheibe 72 auf, auf der ein hohlzylindrischer Ansatz 74 angeordnet ist, den sie umlaufend überragt. In die Scheibe 72 ist eine sechskantförmige Ausnehmung 73 eingebracht, mit der das Trägerstück 71 der Gewindeglocke 7 auf dem Sechskantabschnitt 531 des Kragens 53 der Spindel 5 aufliegt. Die Gewindeglocke 7 ist so formschlüssig mit der Spindel 5 verbunden.

Der Ansatz 74 ist innen mit einen ersten Innengewinde 75 versehen, das zum Eingriff mit dem Außengewinde 27 des Druckzylinders 2 als Trapezlinksgewinde ausgebildet ist. Außen weist der Ansatz 74 ein als Trapezrechtsgewinde ausgeführtes Außengewinde 76 auf. Die Gewindehülse 77 ist als hohlzylindrisches Messingdrehteil ausgebildet und mit einen zweiten Innengewinde 78 versehen, das als Trapezrechtsgewinde ausgebildet ist. Die Gewindehülse 77 ist mit ihrem zweiten Innengewinde 78 auf das Außengewinde 76 des Ansatzes 74 des Trägerstücks 71 aufgeschraubt und mit diesem verklebt, wobei es den Ansatz 74 des Trägerstücks 71 etwa mit seiner halben Länge axial überragt. Alternativ zur Verklebung ist auch eine thermische und/oder mechanische nicht lösbare Verbindung von Trägerstück 71 und Gewindehülse 72 möglich.

Die so gebildete Gewindeglocke 7 weist axial und radial versetzt zueinander ein erstes, als Trapezlinksgewinde ausgebildetes, erstes Innengewinde 75 zum Eingriff mit dem Außengewinde 27 des Druckzylinders 2 und ein als Trapezrechtsgewinde ausgebildetes, zweites Innengewinde 78 zum Eingriff mit dem zweiten Außengewinde 14 des Kopfstücks 1 auf. Durch eine Drehung der Spindel 5 über das Handrad 57 ist so eine axiale Bewegung des Druckzylinders 2 entlang der Gewindeglocke 7 sowie der Gewindeglocke 7 entlang des Kopfstücks 1 in dieselbe Richtung bewirkt.

Der Rückschlagkolben 4 ist im Wesentlichen als zylinderförmiges Messingdrehteil ausgeführt. An seinem dem Durchgangskanal 23 des Druckzylinders 2 zugewandten Ende ist in den Rückschlagkolben 4 axial eine Sackbohrung 41 zur Aufnahme einer Feder 8 eingebracht. An seinem der Spindel 5 zugewandten Ende ist an den Rückschlagkolben 4 außen ein Außenvielkant 42 angeordnet. Zwischen dem Rückschlagkolben 4 und dem zylindrischen ersten Kolbenraum 21 ist so ein Zwischenraum für den Durchtritt von Wasser gebildet. An seinem dem Außenvielkant 42 entgegengesetzten Ende weist der Rückschlagkolben 4 einen Stift 43 zur Aufnahme der Kegelscheibe 6 auf, der endseitig in einen Gewindekopf 44 übergeht.

Die Außenmantelfläche des Rückschlagkolbens 4 ist in dem gesamten innerhalb des ersten Kolbenraums 21 des Druckzylinders 2 axial verschiebbaren Bereich, das heißt von dem Außenvielkant 42 bis zum Stift 43, mit einer Teflonschicht versehen. Alternativ kann der Rückschlagkolben 4 auch aus einem nicht korrodierenden Material wie beispielsweise Edelstahl hergestellt sein. Im Bereich der Sackbohrung 41 sind in den Rückschlagkolben 4 Druckausgleichsbohrungen 45 eingebracht, die dem Eintritt oder dem Austritt von Wasser bei Bewegung des Rückschlagkolbens 4 innerhalb des ersten Kolbenraumes 21 dienen. Die Druckausgleichsbohrungen 45 münden in dem zwischen dem Rückschlagkolben 4 und dem zylindrischen ersten Kolbenraum 21 gebildeten Zwischenraum.

Auf dem Stift 43 des Rückschlagkolbens 4 ist die Kegelscheibe 6 aufgeschoben. Die Kegelscheibe 6 ist im Ausführungsbeispiel als Messingdrehteil ausgeführt. An ihrer dem Kopfstück 1 abgewandten Seite ist an die Kegelscheibe 6 ein kegelförmiger Absatz 61 angeordnet. Auf ihrer dem kegelförmigen Absatz 61 gegenüberliegenden Seite weist die Kegelscheibe 6 einen durchmesserreduzierten Abschnitt 62 auf. Zentrisch ist die Kegelscheibe 6 mit einer Stufenbohrung 63 versehen, welche im Bereich des Übergangs zum durchmesserreduzierten Abschnitt 62 durchmessererweitert ausgebildet ist, wodurch ein Absatz 64 zur Aufnahme eines O-Rings 65 gebildet ist.

Auf den kegelförmigen Absatz 61 der Kegelscheibe 6 ist eine Dichtscheibe 66 aufgelegt und Kegelscheibe 6 und Dichtscheibe 66 sind mittels einer Kragenmutter 46, die auf den Gewindekopf 44 des Stiftes 43 aufgeschraubt ist, an dem Rückschlagkolben 4 befestigt. Die Kegelscheibe 6 ist über den O-Ring 65 gegenüber dem Stift 43 des Rückschlagkolbens 4 abgedichtet.

In montiertem Zustand ist die Spindel 5 mit ihrer ersten Gewindebohrung 54 auf das Außengewinde 36 der Antriebsstange 34 des Pumpkolbens 3 aufgeschraubt, der in den zweiten Kolbenraum 22 des Druckzylinders eingesetzt ist, wobei sein Kolbenabschnitt 31 über die O-Ringe 33 gegenüber dem zweiten Kolbenraum 22 abgedichtet ist und seine Führungsstange 38 durch den Durchgangskanal 23 des Druckzylinders 2 in den ersten Kolbenraum 21 hineinragt. Auf den Kragen 53 der Spindel 5 ist die Gewindeglocke 7 aufgesteckt, die auf dem Kragen 53 aufliegt, wobei der Sechskantabsatz 531 des Kragens in die sechskantförmige Ausnehmung 73 der Scheibe 72 eingreift, wodurch die Gewindeglocke 7 und mit der Spindel 5 formschlüssig verbunden ist. Auf den Vierkantabschnitt 52 der Spindel 5 ist das Handrad 57 aufgesteckt und über die Schraube 56, die in die zweite Gewindebohrung 55 der Spindel 5 eingeschraubt ist, mit dieser verbunden. Die Gewindeglocke 7, die über das Handrad 57 auf der Spindel 5 axial fixiert ist, ist mit ihrem ersten Innengewinde 75 mit dem Außengewinde 27 des Druckzylinders 2 und mit ihrem zweiten Innengewinde 78 mit dem zweiten Außengewinde 14 des Kopfstücks 1 im Eingriff.

Der Rückschlagkolben 4 ist mit seinem Außenvielkant 42 in den zylindrischen ersten Kolbenraum 21 des Druckzylinders 2 eingeschoben, wobei in den Rückschlagkolben 4 eine Feder 8 eingebracht ist, die als Druckspiralfeder ausgebildet ist und die mit ihrem anderen Ende an dem Grund des ersten Kolbenraums 21 des Druckzylinders 2 die Durchmessererweiterung 231 des Durchgangskanals 23 umgebend anliegt, gegen den sie vorgespannt ist. Die Führungsstange 38 ragt in die Sackbohrung 41 des Rückschlagkolbens 4 und die in diesem angeordnete Feder 8 ein. Der Rückschlagkolben 4 ist in dem Druckzylinder 2 über den Gleitring 25 geführt, der zum Wasserdurchtritt für einen Druckausgleich einen Druckausgleichsspalt 251 aufweist.

Der Druckzylinder 2 ist über die beiden O-Ringe 17 gegenüber dem Kopfstück 1 abgedichtet, das mit seinem ersten Außengewinde 11 in eine - in den Figuren lediglich schematisch dargestellte - Armatur 9 eingeschraubt ist. Das Kopfstück 1 ist über den O-Ring 18 gegenüber der Armatur 9 abgedichtet.

Die Armatur 9 umfasst einen Wasserzulauf 91 und einen Wasserablauf 93. Der Wasserzulauf 91 weist einen Anschlag 92 auf, an dem die an dem Rückschlagkolben 4 befestigte Dichtscheibe 66 anliegt. Der Rückschlagkolben 4 ist dabei über die Feder 8 gegen den Anschlag 92 vorgespannt. Dabei strömt kein Wasser vom Wasserzulauf 91 zum Wasserablauf 93.

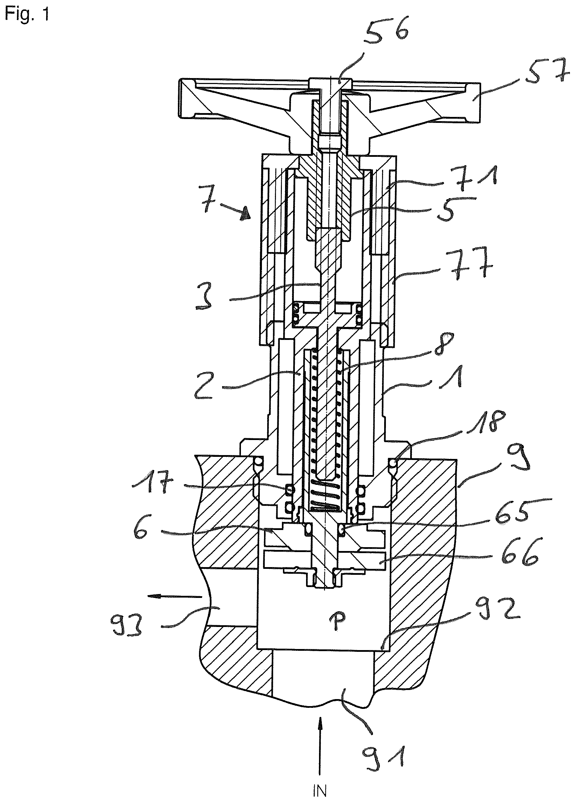

In Figur 1 ist die Gewindeglocke 7 und der Druckzylinder 2 des Rückflussverhindererventils über das mit den Spindel 5 formschlüssig verbundene Handrad 57 in die oberste Position verbracht. In dieser Position liegt der Kolbenabschnitt 31 des Pumpkolbens 3 auf dem Grund des zweiten Kolbenraums 22 des Druckzylinders 2 auf und die Führungsstange 38 ragt weit in die Sackbohrung 41 des Rückschlagkolbens 4 und die in diesem angeordnete Feder 8 ein. Zugleich ist der maximale Abstand zwischen Druckzylinder 2 und Kegelscheibe 6 erreicht. In dem Wasserzulauf 91 und dem Wasserablauf 93 liegt ein identischer Druck p an. Das Wasser strömt vom Wasserzulauf 91 in Richtung des Wasserablaufs 93.

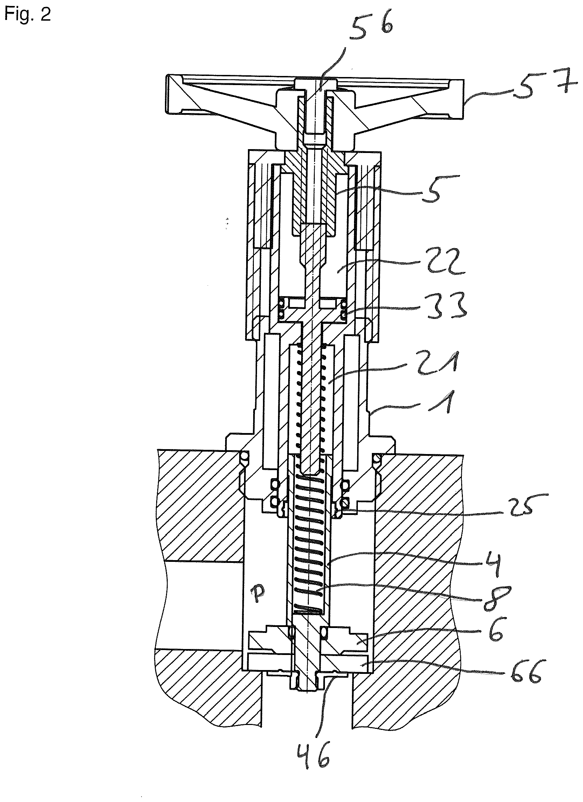

In der Stellung des Rückflussverhindererventils gemäß Figur 2 fließt kein Wasser vom Wasserzulauf 91 in Richtung Wasserablauf 93; der Rückschlagkolben 4 ist über die Feder 8 gegen den Anschlag 92 vorgespannt. Am Wasserzulauf 91 und am Wasserablauf 93 liegt ein identischer Druck p an.

Ist der Wasserablauf 93 versperrt, beispielsweise über ein - nicht dargestelltes - Absperrventil im Zuge eines Wechsels einer Wasseruhr, steigt der Druck p im Wasserablauf 93 an. Bei einer Bewegung des Druckzylinders 2 durch Drehung der Spindel 5 über das Handrad 57 in Richtung der Kegelscheibe 6 zum Versperren des Wasserzulaufs 91 wird durch den zum Gewindeeingriff zwischen Gewindeglocke 7 und Druckzylinder 2 gegenläufigen Gewindeeingriff zwischen Spindel 5 und Antriebsstange 34 zugleich der Kolbenabschnitt 31 des Pumpkolbens 3 nach oben in Richtung Spindel 5 bewegt, wodurch das durch den Druckzylinder 2 verdrängte Wasser durch den Druckausgleichsspalt 251 des Gleitrings 25 über den zwischen Rückschlagkolben 4 und erstem Kolbenraum 21 gebildeten Zwischenraum durch den Durchgangskanal 23 hindurch in den zweiten Kolbenraum 22 gesaugt wird. Durch die in dem Kolbenabschnitt 31 angeordnete Ringnut 37 ist das in dem zweiten Kolbenraum 22 hierfür zur Verfügung stehende Volumen maximiert. Durch die Durchmessererweiterung 231 des Durchgangskanals 23 ist sichergestellt, dass ein Wasserfluss um die durch den Durchgangskanal 23 geführte Führungsstange 38 herum jederzeit gewährleistet ist. Der in dem Wasserablauf 93 vorhandene Druck p bleibt so annähernd konstant. Der durch die Herausbewegung des Rückschlagkolbens 4 aus dem ersten Kolbenraum 21 bewirkte Unterdruck in der Sackbohrung 41 wird durch die in dieser angeordnete Druckausgleichsbohrung 45 ausgeglichen.

Wird bei einer gegenläufigen Bewegung des Handrades der Druckzylinders 2 zur Freigabe des Wasserzulaufs 91 in Richtung der Spindel 5 bewegt, so wird zugleich der Kolbenabschnitt 31 des Pumpkolbens 3 nach unten in Richtung des Grundes des zweiten Kolbenraums 22 bewegt, wodurch das hier befindliche Wasser durch den Durchgangskanal 23 über den zwischen Rückschlagkolben 4 und erstem Kolbenraum 21 gebildeten Zwischenraum durch den Druckausgleichsspalt 251 des Gleitrings 25 hindurch in den Wasserablauf gedrückt wird.

Der in dem Wasserablauf 93 vorhandene Druck p bleibt so wiederum annähernd konstant. Der durch die Hineinbewegung des Rückschlagkolbens 4 in den ersten Kolbenraum 21 bewirkte Überdruck in der Sackbohrung 41 wird wiederum durch die in dieser angeordnete Druckausgleichsbohrung 45 ausgeglichen.

## Patentansprüche

1. Rückflussverhindererventil, mit einem Kopfstück (1), in dem ein Druckzylinder (2) angeordnet ist, der mit einer Spindel (5) verbunden ist, über deren Drehung der Druckzylinder (2) in dem Kopfstück (1) verschiebbar ist und der einen Rückschlagkolben (4) aufnimmt, der in einem ersten Kolbenraum (21) des Druckzylinders (2) verschiebbar angeordnet ist und der endseitig mit einer Dichtanordnung versehen ist, **dadurch gekennzeichnet, dass** der Druckzylinder (2) eine Druckausgleichspumpe umfasst, die über die Spindel (5) betrieben ist.

2. Rückflussverhindererventil nach Anspruch 1, **dadurch gekennzeichnet, dass** die Druckausgleichspumpe durch einen zweiten Kolbenraum (22) des Druckzylinders (22) gebildet ist, der über einen Durchgangskanal (23) mit dem ersten Kolbenraum (21) verbunden ist und in dem ein Pumpkolben (3) verschiebbar angeordnet ist, der über einen Gewindeeingriff mit der Spindel (5) verbunden ist, über deren Drehung er verschiebbar ist.

3. Rückflussverhindererventil nach Anspruch 1 oder 2, **dadurch gekennzeichnet, dass** der Rückschlagkolben (4) in dem ersten Kolbenraum (21) über einen Gleitring (25) geführt ist, der mit einem Druckausgleichsspalt (251) versehen ist.

4. Rückflussverhindererventil nach Anspruch 2 oder 3, **dadurch gekennzeichnet, dass** der Pumpkolben (3) eine Führungsstange (38) aufweist, die durch den Durchgangskanal (23) hindurchragt.

5. Rückflussverhindererventil nach Anspruch 4, **dadurch gekennzeichnet, dass** der Rückschlagkolben (4) eine axiale Sackbohrung (41) aufweist, in welche die Führungsstange (38) in einer in den ersten Kolbenraum (21) eingefahrenen Position des Rückschlagkolbens (4) eingreift, wobei in den Rückschlagkolben (4) bevorzugt eine radiale Druckausgleichsbohrung (45) eingebracht ist, die in der axialen Sackbohrung (41) mündet.

6. Rückflussverhindererventil nach Anspruch 5, **dadurch gekennzeichnet, dass** in der axialen Sackbohrung (41) des Rückschlagkolbens (4) eine Feder (8) angeordnet ist, die gegen den Druckzylinder (2) vorgespannt ist.

7. Rückflussverhindererventil nach einem der Ansprüche 2 bis 6, **dadurch gekennzeichnet, dass** der Pumpkolben (3) eine Antriebsstange (34) aufweist, die mit der Spindel (5) im Gewindeeingriff ist, wobei die Antriebsstange (34) vorzugsweise ein Außengewinde (36) aufweist, das in eine in der Spindel (5) eingebrachte Gewindebohrung (54) eingreift.

8. Rückflussverhindererventil nach einem der vorgenannten Ansprüche,
**dadurch gekennzeichnet, dass** die Spindel (5) drehfest mit einer Gewindeglocke (7) verbunden ist, die ein erstes Innengewinde (75) aufweist, das mit einem außen an dem Kopfstück (1) angeordneten Außengewinde (14) im Eingriff ist.

9. Rückflussverhindererventil nach Anspruch 8, **dadurch gekennzeichnet, dass** in der Gewindeglocke (7) axial vor dem ersten Innengewinde (75) ein innendurchmesserreduzierter Abschnitt angeordnet ist, der ein zweites Innengewinde (78) aufweist, das mit einem außen an dem Druckzylinder (2) angeordneten Außengewinde (27) im Eingriff ist, wobei vorzugsweise das erste Innengewinde (75) ein Rechtsgewinde und das zweite Innengewinde (78) ein Linksgewinde ist.

10. Rückflussverhindererventil nach Anspruch 9, **dadurch gekennzeichnet, dass** die Gewindeglocke (7) aus einem topfförmigen Trägerstück (71) gebildet ist, das einen hohlzylindrischen Ansatz (74) aufweist, der das zweite Innengewinde (78) aufweist und der mit einem Außengewinde (76) versehen ist, auf das eine dieses in der Länge überragende Gewindehülse (77) aufgeschraubt und verklebt ist, die das erste Innengewinde (75) aufweist.

## Claims

1. Backflow preventer valve having a head piece (1), in which a pressure cylinder (2) is arranged, which is connected to a spindle (5), via the rotation of which the pressure cylinder (2) is displaceable in the head piece (1) and which receives a non-return piston (4), which is displaceably arranged in a first piston chamber (21) of the pressure cylinder (2) and which is provided with a sealing arrangement at the end, **characterised in that** the pressure cylinder (2) comprises a pressure compensation pump, which is operated via the spindle (5).

2. Backflow preventer valve according to claim 1, **characterised in that** the pressure compensation pump is formed by a second piston chamber (22) of the pressure cylinder (22), which is connected to the first piston chamber (21) via a through channel (23) and in which a pump piston (3) is displaceably arranged, which is connected via a threaded engagement to the spindle (5), via the rotation of which it is displaceable.

3. Backflow preventer valve according to claim 1 or 2, **characterised in that** the non-return piston (4) is guided in the first piston chamber (21) via a sliding ring (25), which is provided with a pressure compensation gap (251).

4. Backflow preventer valve according to claim 2 or 3, **characterised in that** the pump piston (3) has a guide rod (38), which projects through the through channel (23).

5. Backflow preventer valve according to claim 4, **characterised in that** the non-return piston (4) has an axial blind hole (41), in which the guide rod (38) engages in a position of the non-return piston (4) retracted into the first piston chamber (21), wherein a radial pressure compensation bore (45) is preferably provided in the non-return valve (4), which opens into the axial blind hole (41).

6. Backflow preventer valve according to claim 5, **characterised in that** in the axial blind hole (41) of the non-return piston (4) a spring (8) is arranged, which is pretensioned against the pressure cylinder (2).

7. Backflow preventer valve according to one of claims 2 to 6, **characterised in that** the pump piston (3) has a drive rod (34), which is in threaded engagement with the spindle (5), wherein the drive rod (34) preferably has an external thread (36), which engages in a threaded bore (54) provided in the spindle (5).

8. Backflow preventer valve according to one of the previous claims, **characterised in that** the spindle (5) is non-rotatably connected to a threaded bell (7), which has a first internal thread (75), which engages with an external thread (14) arranged on the outside of the head piece (1).

9. Backflow preventer valve according to claim 8, **characterised in that** a section of reduced inner diameter is arranged in the threaded bell (7) axially upstream of the first internal thread (75), which section has a second internal thread (78), which engages with an external thread (27) arranged on the outside of the pressure cylinder (2), wherein preferably the first internal thread (75) is a right-hand thread and the second internal thread (78) is a left-hand thread.

10. Backflow preventer valve according to claim 9, **characterised in that** the threaded bell (7) is formed by a cup-shaped carrier piece (71), which has a hollow-cylindrical extension (74), which has the second internal thread (78) and which is provided with an external thread (76), onto which a threaded sleeve (77), which has the first internal thread (75), is screwed and bonded and projects beyond the latter in length.

## Revendications

1. Vanne à clapet antiretour, comprenant une pièce têtière (1) dans laquelle est disposé un cylindre de compression (2), cylindre qui est relié avec une broche (5) via la rotation de laquelle le cylindre de compression (2) est déplaçable dans la pièce têtière (1) et qui reçoit un piston antiretour (4) disposé déplaçable dans un premier volume (21) à piston du cylindre de compression (2), et qui à son extrémité est muni d'un dispositif d'étanchéité, **caractérisée en ce que** le cylindre de compression (2) comprend une pompe d'équilibrage de pression actionnée via la broche (5).

2. Vanne à clapet antiretour selon la revendication 1, **caractérisée en ce que** la pompe d'équilibrage de pression est formée par un deuxième volume (22) à piston du cylindre de compression (22), lequel deuxième volume est relié avec le premier volume (21) à piston via un conduit traversant (23) et dans lequel un piston (3) de pompe est disposé déplaçable, piston qui est relié avec la broche (5) par filetage d'engrènement interposé, broche via la rotation de laquelle il peut être déplacé.

3. Vanne à clapet antiretour selon la revendication 1 ou 2, **caractérisée en ce que** le piston antiretour (4) est guidé dans le premier volume (21) à piston via une bague coulissante (25) qui présente une fente d'équilibrage de pression (251).

4. Vanne à clapet antiretour selon la revendication 2 ou 3, **caractérisée en ce que** le piston (3) de pompe présente une barre de guidage (38) qui fait saillie à travers le canal traversant (23).

5. Vanne à clapet antiretour selon la revendication 4, **caractérisée en ce que** le piston antiretour (4) présente un alésage borgne (41) axial dans lequel la barre de guidage (38) engrène lorsque le piston antiretour (4) se trouve en position rentrée dans le premier volume (21) de piston, sachant que dans le piston antiretour (4) a été ménagé de préférence un alésage radial d'équilibrage de pression (45) qui aboutit dans l'alésage borgne (41) axial.

6. Vanne à clapet antiretour selon la revendication 5, **caractérisée en ce que** dans l'alésage borgne (41) axial du piston antiretour (4) a été disposé un ressort (8) précontraint contre le cylindre de compression (2).

7. Vanne à clapet antiretour selon l'une quelconque des revendications 2 à 6, **caractérisée en ce que** le piston (3) de pompe présente une barre d'entraînement (34) qui engrène avec la broche (5) par filetage interposé, sachant que la barre d'entraînement (34) présente de préférence un filetage externe (36) qui engrène dans un alésage fileté (54) ménagé dans la broche (5).

8. Vanne à clapet antiretour selon l'une quelconque des revendications précédentes, **caractérisée en ce que** la broche (5) est reliée sans pouvoir tourner avec une cloche filetée (7), cloche qui présente un premier filetage intérieur (75), lequel engrène avec un filetage extérieur (14) disposé à l'extérieur contre la pièce têtière (1).

9. Vanne à clapet antiretour selon la revendication 8, **caractérisée en ce que** dans la cloche filetée (7) est disposé axialement, devant le premier filetage intérieur (75), un segment d'un diamètre intérieur réduit, lequel présente un second filetage intérieur (78) qui engrène avec un filetage extérieur (27) disposé à l'extérieur contre le cylindre de compression (2), sachant que de préférence le premier filetage intérieur (75) est un filetage avec pas à droite, et le deuxième filetage intérieur (78) un filetage avec pas à gauche.

10. Vanne à clapet antiretour selon la revendication 9, **caractérisée en ce que** la cloche filetée (7) est formée par une pièce support (71) en forme de pot, qui présente un embout (74) cylindrique creux, lequel présente le deuxième filetage intérieur (78) et qui est muni d'un filetage extérieur (76) sur lequel est vissée et collée une douille filetée (77) le dépassant en longueur, douille qui présente le premier filetage intérieur (75).
